# EUROPEAN PATENT SPECIFICATION

(11) **EP 1 798 835 B1**
(45) Date of publication and mention of the grant of the patent: **30.12.2009**
(21) Application number: 05112066.5
(22) Date of filing: 13.12.2005
(51) Int. Cl.: H02J 1/10, H02J 7/00

(54) **Charger and power supply for mobile devices**
Batterieladegerät und Stromversorgungsschaltung für mobile Geräte
Chargeur de batterie et circuit d'alimentation pour des appareils mobiles

(43) Date of publication of application: 20.06.2007
(73) Proprietor: Research In Motion Limited, Waterloo, Ontario N2L 3W8 (CA)
(72) Inventor: Veselic, Dusan, Oakville, Ontario L6M 3N7 (CA)
(74) Representative: Patel, Binesh

(56) References cited:
- EP-A- 0 623 985
- EP-A- 0 752 748
- WO-A-2004/075371
- US-A- 6 100 664
- US-A1- 2004 164 708

## Description

Charging and power supply circuits for mobile devices are disclosed.

As will be appreciated by those skilled in the art, there are various reasons for choosing a Universal Serial Bus (USB) port to supply charging power to a mobile device, rather than using a separate alternating current (AC) charger. Unfortunately, USB ports can only provide limited power.

Power rails of mobile devices often require a very clean supply voltage. Thus, Low Drop-Out (linear mode) circuits have been used to meet this requirement. A problem with these circuits is that they can be quite inefficient power converters.

WO2004/075371 discloses a battery charging circuit which includes a semiconductor switch, a battery charge controller and a voltage sensing circuit. The output of the voltage sensing circuit allows the battery charge controller to control the semiconductor switch to arrange a division of power being supplied to a device and to a rechargeable battery pack.

EP0752748 discloses regulation, by a regulator circuit, of power output to a load. As long as a source with sufficiently high voltage is connected at the input, the regulator circuit acts to maintain a constant current and constant voltage battery charger function.

According to a first example embodiment, there is preferably provided a USB-compliant charging and power supply circuit comprising switch-mode battery charging circuitry for receiving power from an external power source and for supplying output power, through an output node, to an electronic system of an electronic communication device and to a battery, said switch-mode battery charging circuitry having an integrated circuit and an inductor, said integrated circuit arranged to cooperate with said inductor to provide current of said output power of greater magnitude than current of said power received from said external power source; battery isolation circuitry having a semiconductor switch connecting the output node to said battery, the battery isolation circuitry being arranged to sense voltage at said output node and to variably restrict current to said battery when said voltage is below a minimum voltage value by operationally controlling said semiconductor switch as current passes through it; additional circuitry in electrical communication with said battery isolation circuitry for receiving feedback from said electronic system and, in response to said feedback, for adjusting said minimum voltage value in relation to requirements of said electronic system; whereby during variable current restriction said electronic system is arranged to be supplied required power with said battery being supplied any additional available power.

According to another example embodiment, there is preferably an electronic communication device comprising a device housing; a rechargeable battery contained within the housing; an electronic system is contained within the housing; and a USB-compliant charging and power supply circuit according to the first example embodiment.

According to yet another example embodiment, there is preferably a power management method for allocating power between a rechargeable battery and an electronic system having a power input and a number of modes of operation, the power supplied to the battery and the electronic system from a requisite power source, the method comprising: deriving said requisite power source from an external power source, said requisite power source being of a higher current but lower voltage than said external power source; receiving feedback from said electronic system; determining, in response to said feedback, a minimum voltage value needed at a node directly connected to said power input with reference to which of said modes of operation the electronic system is currently in; monitoring voltage at said node; increasing power allocation to said electronic system by variably restricting current from said requisite power source to said battery when said voltage is below said minimum voltage value; and supplying at least sufficient power to said electronic system for it to properly function.

### BRIEF DESCRIPTION OF THE DRAWINGS

Reference will now be made, by way of example, to the accompanying drawings which show example embodiments, and in which:

Figure 1 shows, in diagrammatic form, a computer system connected to a mobile device via a USB port;

Figure 2 is a circuit schematic representation of a charging and power supply circuit architecture according to an example embodiment;

Figure 3 is a circuit schematic representation illustrating additional circuitry connected to the circuit depicted in Figure 2, the additional circuitry permitting variable V_{SYS} output voltage; and

Figure 4 is a circuit schematic representation of a charging and power supply circuit architecture similar to the architecture of Figure 2, but with most of the circuitry contained within a single integrated circuit chip.

Similar reference numerals may have been used in different figures to denote similar components.

### DESCRIPTION OF PREFERRED EMBODIMENTS

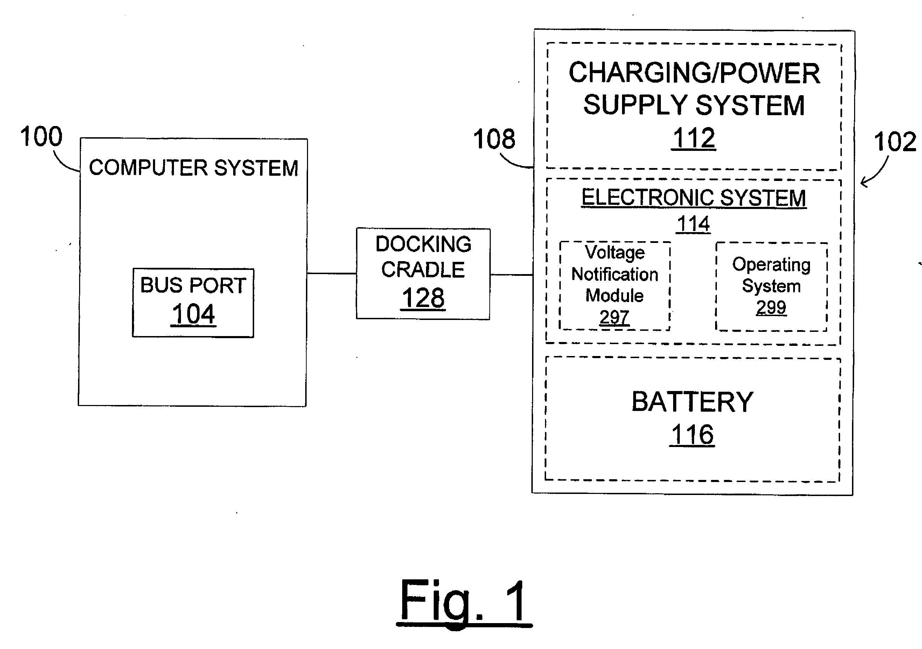

Figure 1 is a diagram of a computer system 100 connected to a mobile device 102 via a computer data bus port 104 that in one embodiment is a USB port. The computer system 100 could be a personal computer, a laptop, an entertainment system connected to a television, or one of a variety of other types of computer systems. In some example embodiments, the portable device 102 is a handheld device such as a personal digital assistant (PDA), a cellular telephone, or a handheld computer; however at least some example embodiments are not limited to these types of mobile devices.

The portable device 102 includes a portable device housing 108, a charging and power supply circuit 112, an electronic system 114, a rechargeable battery 116 and a number of other modules/components which are not illustrated because they do not further an understanding of what is herein being described. The device housing 108 will vary in shape and size depending upon the particular portable device 102.

The rechargeable battery 116 is one of the components illustrated within the device housing 108. In one embodiment, the rechargeable battery 116 is a Li-ion battery. Nickel metal hydride and nickelcadmium are other well known types of rechargeable batteries, but practically speaking these types of rechargeable batteries have to a large degree been succeeded in mobile devices by Li-ion batteries. It will be understood that the rechargeable battery 116 need not necessarily be a single battery, but could instead be multiple batteries sourcing power in series, parallel or a combination of these. In one embodiment, the rechargeable battery 116 is a battery pack.

In the illustrated embodiment, the portable device 102 connects to the USB port 104 of computer system 100 through a docking cradle 128 that is adapted to receive the portable device 102. It will be understood that the portable device 102 could alternatively be connectable to the bus port 104 by just using a direct cable connection to make the attachment; however having a docking cradle can be practical. For example, the portable device 102 need only be set down in the docking cradle 128 to make an electronic connection to the computer system 100. In at least one alternative embodiment, at least a portion of the charging and power supply circuit 112 is contained in the docking cradle 128.

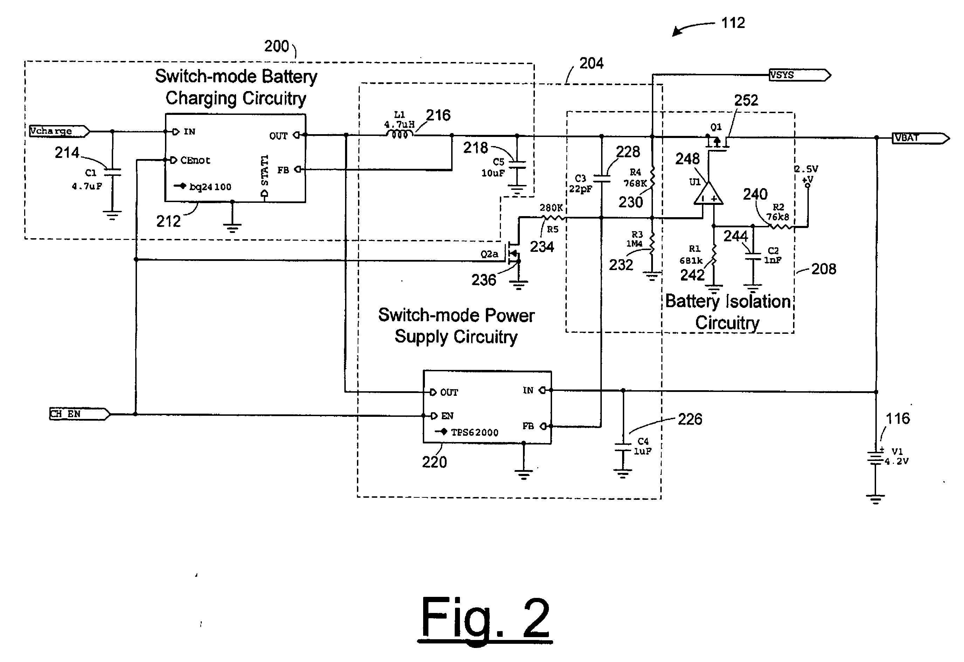

If the bus port 104 has sufficient power, it can be used to supply charging power to charge the battery 116. Figure 2 illustrates an architecture of the charging and power supply circuit 112 in accordance with an example embodiment. The circuit architecture includes switch-mode battery charging circuitry 200 that receives power from the external power source, system power supply circuitry 204 and battery isolation (and current split) circuitry 208. The circuit 112 is electrically connected at one of its output terminals (V_{BAT}) to the rechargeable battery 116, and at another of its output terminals (V_{SYS}) to a power source input of the electronic system 114. External power (i.e. power originating from outside of the portable device 102, for example at USB port 104) is sourced through an input terminal (V_{CHARGE}) of the circuit 112.

The circuitry 200 and the circuitry 204 are switch-mode circuitries. As will be appreciated by those skilled in the art, at least some examples of switch-mode circuitries are characterized by a high-pass power FET and a low-pass power FET (the two FETs are collectively referred to as a half-bridge) that are connected at a terminal of an inductor (in the present example, inductor 216) that is employed to build up current.

The difference between switch-mode circuitry and linear mode circuitry will also be appreciated by those skilled in the art. Switch-mode circuitry is capable of providing a greater output current than the input current. For example, say V_{CHARGE} is 8.4 Volts and the input current to the switch-mode battery circuitry 200 is 100 mA. Now if the voltage at the output of the circuitry 200 is to be less than the V_{CHARGE}, the output current can theoretically be greater than 100 mA (Vᵢₙ * Iᵢₙ is ≥ Vₒᵤₜ * Iₒᵤₜ). So for example, if the voltage at the output of the circuitry 200 were to be 4.2 V, the output current from the circuitry 200 could be, for example, 150 mA or greater.

By contrast, linear mode circuitry is not capable of providing a greater output current than the input current. So again with reference to the above mentioned example, if the input voltage to linear mode circuitry was 8.4 V, and the output voltage from the linear mode circuitry were to be 4.2 Volts, there would be only 50% efficiency. In other words, 50% of the input power to the linear mode circuitry in this example would be dissipated as heat. An effect of lower efficiency within a circuit similar to the example circuit 112 is that less power is available to the electronic system (and also the battery in the case of charging). One skilled in the art will appreciate that certain electronic systems (for example certain handheld systems) increasingly need more power to function.

In the illustrated example embodiment, the switch-mode battery charging circuitry 200 includes a Li-ion and Li-polymer switch-mode charge management integrated circuit (IC) 212 such as part number bq24105 or bq24115 available from Texas Instruments. As will be appreciated by one skilled in the art, the IC 212 is used in applications such as Li-ion battery (e.g. battery pack) charging. The IC 212 has a typical switching frequency of 1.1 MHz and also the IC 212 charges the battery in three phases: conditioning, constant current and constant voltage. The first phase, the conditioning phase, applies if the voltage value of the battery 116 is below a certain threshold (for example, if the battery voltage is below between 68% and 75% of the fully charged voltage of the battery 116 depending upon the operating conditions of the IC 212). During this phase a precharge current is applied to the battery 116 to revive it if it has been deeply discharged. Otherwise, charging begins in the constant current phase during which the current sourced from the IC 212 is substantially a constant value. This phase continues until the IC 212 detects that the battery 116 has been brought to its fully charged voltage value. (Battery voltage can be monitored indirectly through a BAT pin (not shown) of the IC 212). More specifically, one skilled in the art will appreciate that, in some examples, the electronic system 114 is able to monitor the value of V_{BAT}. Based on monitored values, the system 114 generates appropriate signals that are transmitted through processor control lines to the IC 212).

When the battery 116 has been brought to its fully charged voltage value, charging enters the final phase, the constant voltage phase. During the constant voltage phase, the battery 116 is substantially maintained at the fully charged battery voltage value, with sourced current tapering off during this phase. Charge is terminated based on a user-selectable minimum current level. This current level is selected by the value of a programming resistor connected to the I_{SET2} pin (not shown) of the IC 212.

The switch-mode battery charging circuitry 200 also includes a capacitor 214, an inductor 216, and a capacitor 218, which in an example embodiment can have the values 4.7µF, 4.7µH and 10µF respectively (other values can also be used). It will be understood that with a supply voltage being supplied to the input (IN) pin of the IC 212 through terminal V_{CHARGE}, the capacitor 214 filters the supply voltage (the capacitor 214 reduces interference). The inductor 216 has one of its terminals connected to the output (OUT) pin of the IC 212, and its other terminal is connected to terminals of other components including the feedback (FB) pin of the IC 212 and a terminal of the capacitor 218. The IC 212 is manufactured with the FB pin in order to provide for output voltage analog feedback adjustment. In the illustrated embodiment, the FB pin connection is such that the output node of the circuitry 200 (the V_{SYS} node) is also the node of the FB pin, and the connection establishes a feedback means of the switch-mode battery charging circuitry 200 for adjusting a voltage value output to the electronic system 114 (Figure 1).

With reference now to the illustrated system power supply circuitry 204, this circuitry includes switch-mode power supply (SMPS) circuitry. This SMPS circuitry includes a low power, switch-mode DC-DC converter IC 220. A suitable IC 220 is the TPS62000 (TPS6200x) IC available from Texas Instruments. The TPS62000 IC is a current-mode pulse-width modulation (PWM) converter and is suitable for systems such as those powered by a one-cell Li-ion battery. The IC 220 is manufactured with an FB pin in order to provide for output voltage analog feedback adjustment. This FB pin operates in a manner similar to the FB pin of the IC 212. The IC 220 typically operates down to an input voltage of 1.8 Volts, and it enters a power-saving pulse-frequency modulation (PFM) mode at light load currents. The IC 220 has a typical switching frequency of 750 KHz, permitting the use of the relatively small inductor 216.

Like the IC 212, the IC 220 can run at a high efficiency because they are both switch-mode. Thus the IC 220 also contains a half-bridge, and the half-bridge is directly connected to the inductor 216 (employed to build up current). Like the switch-mode battery charging circuitry 200, the system power supply circuitry 204 is capable of providing a greater output current than the input current.

Li-ion battery 116 is connected to the input (IN) pin of the IC 220 because the IC 220 receives power from it. In one embodiment, the battery 116 provides an input voltage of about 4.2 Volts when the battery is fully charged. It will be understood however that the embodiments disclosed in this application are not limited just to portable devices that use batteries whose voltages are roughly 4.2 Volts.

A capacitor 226 has one terminal connected to the IN pin of the IC 220. This capacitor filters the input voltage and reduces interference. In one embodiment, the capacitor 226 can be about 1µF.

Like the IC 212, the output (OUT) pin of the IC 220 is connected to a terminal of the inductor 216 (in the illustrated embodiment the inductor 216 is within both the switch-mode battery charging circuitry 200 and the system power supply circuitry 204). The IC 220 supplies converted power to the electronic system 114 (Figure 1) by way of the inductor 216 and then through the output node of the circuitry 200.

A terminal of the inductor 216 (the terminal opposite the terminal connected to the OUT pins of ICs 212 and 220) is connected to a capacitor 228 and a resistor 230 that are in parallel. As will be understood by those skilled in the art, the capacitor 228 permits a much faster feedback response when transient spikes occur. Illustrated below the resistor 230 is a resistor 232 in parallel with the series combination of a resistor 234 and an n-channel enhancement field effect transistor (FET) 236.

In the illustrated battery isolation circuitry 208, a resistor 240, a resistor 242, and a capacitor 244 having example values of 76.8kΩ, 681kΩ and 1nF respectively, each have a terminal connected to the non-inverting terminal of an operational amplifier (op-amp) 248. The output of the op-amp 248 is connected to the gate of a p-channel enhancement FET 252. The capacitor 244 filters out the output voltage ripple. The resistors 240 and 242 act as a voltage divider of the example 2.5V voltage source so that the voltage at the non-inverting terminal of the op-amp 248 is 2.25V. As will be appreciated by those skilled in the art, varying the voltage at the non-inverting terminal will impact the behaviour of the op-amp 248. For example, the output of the op-amp 248 will move within the range of ground and its V_{CC} in order to keep the inverted and non-inverted inputs at the same voltage potential.

It will be understood that when the FET 236 is off, the voltage at the V_{SYS} node is calculated as some adjustable value (which is dependent upon the voltage at the non-inverting input terminal of the op-amp 248) multiplied by 1 plus the value of the resistor 230 divided by the value of the resistor 232. It will also be understood that the formula is different when the FET 236 is in saturation: the voltage at the V_{SYS} node will go up in the adjusted formula because the resistor 234 and the resistor 232 in parallel form a lower resistance than the resistor 232 by itself.

In the illustrated example embodiment, the relationship between I_{BATTERY} (the current passing through node V_{BAT}), I_{CHARGE} (the current passing through node V_{CHARGE}), and I_{SYS} (the current passing through node I_{SYS}) is I_{BATTERY} = I_{CHARGE} - I_{SYS}. Based on this relationship and assuming a fixed I_{CHARGE}, it will be understood that I_{SYS} must be decreased for I_{BATTERY} to increase. It will also be understood that I_{CHARGE} could be limited in the case where the current is being supplied from a computer bus port such as a USB port. Therefore in the case where the battery 116 is substantially discharged (e.g. at say 2.3 Volts) and the battery 116 is to be charged by bus port charging, it will be understood that the system could be starved if current to the substantially discharged battery is not regulated.

At the interface between the switch-mode battery charging circuitry 200 and the battery 116, the FET 252 provides this regulation. The FET 252 functions as a semiconductor switch between nodes V_{SYS} and V_{BAT}. As one skilled in the art will appreciate, the FET 252 can be made to act in a manner somewhat similar to a variable resistor when the voltages on its terminals correspond to operation in the triode region of the FET. In Figure 2, the behavior of the FET 252 is controlled in part by the op-amp 248, the output of which is in turn determined in part by the resistors 230 and 232.

The circuitry 208 works against V_{SYS} falling below a certain voltage. The battery isolation circuitry 208 does this by operationally controlling the FET 252. In particular, at times when the voltage of the battery 116 is low enough to urge V_{SYS} below the minimum voltage, the configuration of the battery isolation circuitry 208 causes the FET 252 to present a variable resistance to limit I_{BATTERY} as will be apparent to those skilled in the art. Thus, it will be understood that the circuitry 208 monitors V_{SYS} in order that the FET 252 can limit I_{BATTERY} to keep V_{SYS} from falling too low. For the circuit architecture of the illustrated example, the minimum V_{SYS} during charging is the voltage at the non-inverting input terminal of the op-amp 248 divided by the value of (resistor 232 ö (resistor 232 + resistor 230)).

It will be understood that an effect of the circuitry 208 working against V_{SYS} falling below a minimum value is to make the example circuit 112 USB-compliant. Those skilled in the art will appreciate that in at least some examples of USB at least the following lines exist: D⁺, D⁻, V_{BUS}, GND. Referring to figure 1, during setup between the computer system 100 and the electronic system 114, the system 114, in at least some examples, has to make D⁺ go from low to high at 100 ms.

In order for the electronic system 114 to do this, the electronic system 114 needs to be able to talk over USB in less than 100 ms. The example circuit 112 can permit this even when the battery 116 has a voltage that is significantly lower than the minimum value for V_{SYS}. This is because the circuitry 208 ensures that V_{SYS} is (without significant delay) brought to a high enough value to permit the electronic system 114 to talk over USB. As a result, the example circuit 112 is USB-compliant.

The FET 252 will variably restrict current to the battery 116 to ensure that the electronic system has the requisite power source. As for the battery 116, it is supplied any additional available power (i.e. the leftover portion of the output power from the switch-mode battery charging circuitry 200). However, if V_{SYS} is not urged by the battery 116 to fall below the minimum voltage because V_{BAT} is sufficiently high, the FET 252 will be in full saturation if the battery 116 is being charged. The FET 252 can be turned off if the CH_EN signal, which is also fed to the CEnot pin of the IC 212 and the EN pin of the IC 220, is set to high, which causes the FET 236 to saturate, thereby creating a positive output from the op-amp 248 which shuts the FET 252 off. Thus, the charging and power supply circuit can include circuitry for turning the FET 252 off when charging is disabled.

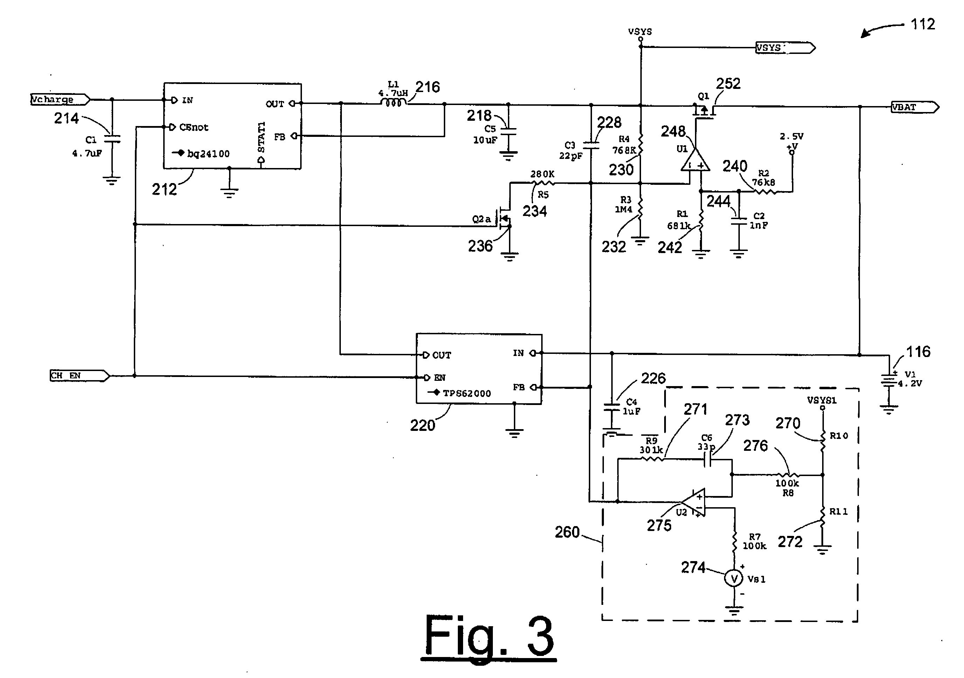

Referring to Figure 3, a circuit architecture similar to the one of Figure 2 is illustrated, except that the circuit of this schematic includes additional circuitry 260 permitting variable V_{SYS} output voltage. In the circuitry 260, the terminal at V_{SYS1} is connected to the V_{SYS} node, and resistors 270 and 272 provide a voltage divider to scale down the voltage at the positive input terminal of op-amp 275 through resistor 276 from the V_{SYS} voltage. The values of the resistors 270 and 272 will depend on the maximum voltage of the variable voltage source 274 as compared to the maximum V_{SYS}. For example, if the voltage source 274 will provide up to a maximum voltage that is four times less than the maximum V_{SYS}, then the resistor 270 should be three times larger than the resistor 272. When the circuitry 260 is added (and the terminal at V_{SYS1} is connected to the V_{SYS} node) V_{SYS} is related to the voltage provided by the voltage source 274 by the following formula: V_{SYS} = voltage source 274 * (resistor 272 + resistor 270) / resistor 272. (In one example where the voltage source 274 can be raised to the maximum V_{SYS}, the voltage divider will be absent from the circuitry 260 and V_{SYS} will be equal to the voltage source 274).

The voltage source 274 is, in some examples, provided by the electronic system 114 (as later explained in this description). A resistor 271 and a capacitor 273 having example values of 301 KΩ and 33 pF respectively are connected in series between an output terminal and a non-inverting input terminal of the op-amp 275. The resistor 271 and the capacitor 273 provide positive feedback for the operation of the op-amp 275.

The illustrated configuration could, in some applications, allow for flexible and increased power gain. For example, a handheld device might need different values for V_{SYS} during different periods of operation. During one period when a handheld device is in sleep mode the required V_{SYS} could be significantly lower than during another period when the handheld device needs to supply power to modules and subsystems required for the processing of communications. Output from the op-amp 275 of the circuitry 260 (as controlled by the voltage source 274) effects feedback input provided to the ICs 212 and 220, and in this manner dynamic variation of the voltage value at the V_{SYS} node is possible. For example, in the circuit architecture of Figure 2, when the SMPS circuitry is supplying the power (i.e. no charging) the voltage at the V_{SYS} node is calculated as 0.45 V * (1 + (resistor 230/ resistor 232 resistor 234)). (This formula is known to those familiar with the operation of the IC 220). In the circuit architecture of Figure 3, the output node of the additional circuitry 260 is directly connected to the node between the resistor 230 and the resistors 232 and 234 that are in parallel. In this manner the output of the circuitry 260 can be seen to override the resistor-value-based determination of the voltage at the V_{SYS} node. In particular, when the circuitry 260 is active, the resistors 230, 232 and 234 become irrelevant in the determination of the V_{SYS} node voltage, and the voltage at the V_{SYS} node can be dictated by suitable increasing or decreasing of the voltage of the variable voltage source 274 in accordance with the formula V_{SYS} = voltage source 274 * (resistor 272 + resistor 270) / resistor 272.

In some examples, the microprocessor of the device will change the voltage provided by the voltage source 274 when the device enters a mode corresponding to a different required V_{SYS}. For example (as shown in Figure 1) the portable device 102 could include a voltage notification module 297 interacting with an operating system 299 stored on the device 102. In such examples, the operating system 299 might periodically provide the voltage notification module 297 with the current mode of operation of the device 102 in order that the voltage notification module 297 might take action if required. Such action could include the generation of an appropriate voltage at a pin of the device's microprocessor which would provide the voltage source 274 within the circuitry 260.

In some examples, the microprocessor of the device 102 would be configured to implement the voltage notification module 297. In other examples, some or part of the functionality of the voltage notification module 297 would be implemented through firmware or hardware components instead of or in combination with computer software instructions executed by a processor of the device 102.

In at least one example embodiment where there is dynamic variation of V_{SYS} in relation to requirements of the electronic system 114, the value of variable V_{SYS} is dictated by the highest power rail during a particular period (e.g. mode) of operation. The following example scenario illustrates this concept. During sleep mode for an example device, the device's microprocessor might only require a 1.1 V power rail and the device's volatile memory might only require a 1.5 V power rail. Hence the highest power rail required during sleep mode might only be 1.5 V. Therefore during sleep mode, the minimum V_{SYS} might only be 1.5 V plus possibly some value (e.g. 150 mV) to account for a voltage drop across transistor(s) inside a voltage regulating Low-Drop Out (LDO) regulator of the device. (Such an LDO would be at the interface of the V_{SYS} node and V_{CC} of one or more circuitries within the electronic system 114)..

On the other hand in a different mode of operation, the example device's RF module might need to be powered. In this second mode of operation the device's microprocessor might require a 1.7 V power rail, the volatile memory might still require a 1.5 V power rail, but the RF module might require a 2.8 V power rail. Therefore assuming the RF module requires the highest power rail, the minimum V_{SYS} during the second mode of operation might be 2.8 V plus the previously mentioned additional value to account for the transistor voltage drop.

It will be understood that the ICs of the illustrated example embodiments both have the characteristic of stepping down voltage. For this and other reasons understood by those skilled in the art, it would be practical, in a number of circumstances, to combine the functionality of the IC 212 and the functionality of the IC 220 within a single IC, thereby reducing the number of needed ICs by one.

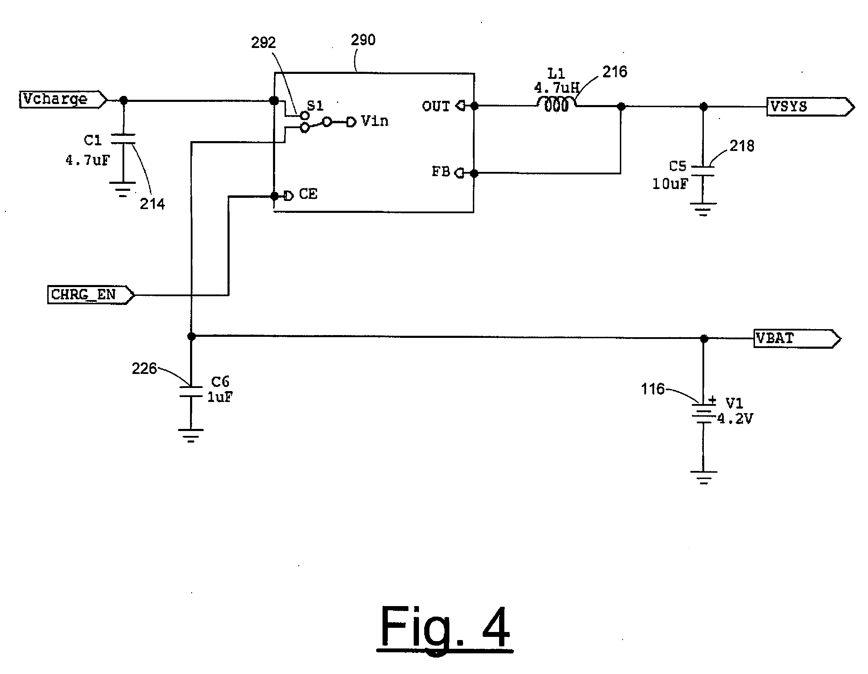

Figure 4 illustrates this possibility. Illustrated example IC 290 would provide a solution similar to the solution provided by the example circuit 112, except although the entire battery isolation circuitry is implemented within the IC 290, certain components of the circuit 112 (in particular the capacitors 214, 218, 226 and the inductor 216) are not contained in this particular IC. Also, a switch element 292 within the IC 290 replaces the FET 236 and the resistor 234.

In some examples of ICs similar to the IC 290, multiple OUT pins in electrical communication with the electronic system 114 are provided. In such examples, which of the OUT pins will deliver power to the electronic system 114 depends on what voltage (at most) is required on the system's power rail(s) at a particular instance in time. This may depend on the current mode of operation (for example, sleep or normal) of the electronic system 114.

Certain adaptations and modifications of the described embodiments can be made. Therefore, the above discussed embodiments are considered to be illustrative and not restrictive.

## Claims

1. A Universal Serial Bus "USB"-compliant charging and power supply circuit (112) comprising:
switch-mode battery charging circuitry for receiving power from an external power source and for supplying output power, through an output node, to an electronic system (114) of an electronic communication device (102) and to a battery (116), said switch-mode battery charging circuitry having an integrated circuit (212) and an inductor (216), said integrated circuit (212) arranged to cooperate with said inductor (216) to provide current of said output power of greater magnitude than current of said power received from said external power source;
battery isolation circuitry (208) having a semiconductor switch (252) connecting the output node to said battery (116), the battery isolation circuitry (208) being arranged to sense voltage at said output node and to variably restrict current to said battery (116) when said voltage is below a minimum voltage value by operationally controlling said semiconductor switch (252) as current passes through it **characterized in that**
additional circuitry (260) in electrical communication with said battery isolation circuitry (208) for receiving feedback from said electronic system (114) is provided and, in response to said feedback, for adjusting said minimum voltage value in relation to requirements of said electronic system (114);
whereby during variable current restriction said electronic system (114) is arranged to be supplied required power with said battery (116) being supplied any additional available power.

2. The circuit as claimed in claim 1 wherein said switch-mode battery charging circuitry has switch-mode power supply circuitry for receiving power from said battery (116) and for supplying converted power to the electronic system (114) through said inductor (216) and said output node.

3. The circuit as claimed in claim 1 or claim 2 wherein voltage at the output node is fed back to said integrated circuit (212) and said integrated circuit (212) is arranged to adjust said voltage value at the output node.

4. The circuit as claimed in claim 1 further comprising a switch-mode direct current to direct current converter integrated circuit (220) for receiving power from said battery (116) and for supplying converted power to said inductor (216) within said switch-mode battery charging circuitry.

5. A power management method for allocating power between a rechargeable battery (116) and an electronic system (114) having a power input and a number of modes of operation, the power supplied to the battery (116) and the electronic system (114) from a requisite power source, the method comprising:
deriving said requisite power source from an external power source, said requisite power source being of a higher current but lower voltage than said external power source;
receiving feedback from said electronic system (114), **characterised in that** determining, in response to said feedback, a minimum voltage value needed at a node directly connected to said power input with reference to which of said modes of operation the electronic system (114) is currently in;
monitoring voltage at said node;
increasing power allocation to said electronic system (114) by variably restricting current from said requisite power source to said battery (116) when said voltage is below said minimum voltage value; and
supplying at least sufficient power to said electronic system (114) for it to properly function.

6. An electronic communication device (102) electrically connectable to an external power source, the device (102) comprising:
a device housing (108);
a rechargeable battery (116) contained within said housing (108);
an electronic system (114) contained within said housing (108); and
a Universal Serial Bus "USB"-compliant charging and power supply circuit (112) as claimed in any one of claims 1 to 4.

## Patentansprüche

1. Universal-Serial-Bus-(USB)-konforme Batterielade- und Stromversorgungsschaltung (112), die Folgendes umfasst:
eine getaktete Batterieladeschaltung für den Empfang von Strom von einer externen Stromquelle und für die Versorgung eines elektronischen Systems (114) eines elektronischen Kommunikationsgeräts (102) und einer Batterie (116) über einen Ausgangsknoten mit Ausgangsstrom, wobei die getaktete Batterieladeschaltung einen integrierten Schaltkreis (212) und einen Induktor (216) aufweist, der integrierte Schaltkreis (212) so angeordnet ist, dass er mit dem Induktor (216) so zusammenarbeitet, dass er Strom des Ausgangsstroms mit einer größeren Größe bereitstellt als Strom des Stroms, der von der externen Stromquelle empfangen wird;
eine Batterietrennschaltung (208), die einen Halbleiterschalter (252) aufweist, der den Ausgangsknoten mit der Batterie (116) verbindet, wobei die Batterietrennschaltung (208) so angeordnet ist, dass sie eine Spannung an dem Ausgangsknoten erfasst und den Strom zu der Batterie (116) variabel begrenzt, wenn die Spannung unterhalb eines Mindestspannungswerts liegt, indem der Halbleiterschalter (252) funktionsfähig gesteuert wird, wenn Strom durch ihn hindurch fließt, **dadurch gekennzeichnet, dass**
eine zusätzliche Schaltung (260) bereitgestellt ist, die mit der Batterietrennschaltung (208) in elektrischer Kommunikation steht, um eine Rückführung von dem elektronischen System (114) zu erhalten und als Reaktion auf die Rückführung den Mindestspannungswert im Verhältnis zu den Anforderungen des elektronischen Systems (114) einzustellen;
wodurch das elektronische System (114) so angeordnet ist, dass es während der variablen Strombegrenzung mit Hilfe der Batterie (116), die mit zusätzlichem verfügbarem Strom versorgt wird, mit erforderlichem Strom versorgt wird.

2. Schaltung nach Anspruch 1, wobei die getaktete Batterieladeschaltung eine getaktete Stromversorgungsschaltung für den Empfang von Strom von der Batterie (116) und für die Versorgung des elektronischen Systems (114) mit umgewandeltem Strom durch den Induktor (216) und den Ausgangsknoten aufweist.

3. Schaltung nach Anspruch 1 oder Anspruch 2, wobei eine Spannung am Ausgangsknoten zu dem integrierten Schaltkreis (212) rückgeführt wird und der integrierte Schaltkreis (212) so angeordnet ist, dass er den Spannungswert am Ausgangsknoten einstellt.

4. Schaltung nach Anspruch 1, die des Weiteren einen getakteten integrierten Gleichstrom-Gleichstrom-Wandlerschaltkreis (220) für den Empfang von Strom von der Batterie (116) und für die Versorgung des Induktors (216) mit umgewandeltem Strom innerhalb der getakteten Batterieladeschaltung umfasst.

5. Stromverwaltungsverfahren für die Zuweisung von Strom zu einer wiederaufladbaren Batterie (116) und einem elektronischen System (114), das einen Stromeingang und eine Anzahl von Betriebsarten aufweist, wobei die Batterie (116) und das elektronische System (114) von einer erforderlichen Stromquelle mit Strom versorgt werden und das Verfahren Folgendes umfasst:
Ableiten der erforderlichen Stromquelle von einer externen Stromquelle, wobei die erforderliche Stromquelle einen stärkeren Strom, jedoch eine niedrigere Spannung als die externe Stromquelle aufweist;
Empfangen einer Rückführung von dem elektronischen System (114); **gekennzeichnet durch** Folgendes:
als Reaktion auf die Rückführung Ermitteln eines Mindestspannungswerts, der an einem Knoten benötigt wird, der direkt mit der Stromeingabe verbunden ist, in Bezug darauf, in welcher Betriebsart sich das elektronische System (114) gegenwärtig befindet;
Überwachen der Spannung an diesem Knoten;
Erhöhen der Stromzuweisung zu dem elektronischen System (114), indem Strom von der erforderlichen Stromquelle zu der Batterie (116) variabel begrenzt wird, wenn die Spannung unterhalb des Mindestspannungswerts liegt; und
Versorgen des elektronischen Systems (114) mindestens mit ausreichendem Strom, damit es korrekt funktioniert.

6. Elektronisches Kommunikationsgerät (102), das mit einer externen Stromquelle elektrisch verbunden werden kann, wobei das Gerät (102) Folgendes umfasst:
ein Gerätegehäuse (108);
eine wiederaufladbare Batterie (116), die in dem Gehäuse (108) enthalten ist;
ein elektronisches System (114), das in dem Gehäuse (108) enthalten ist; und
eine Universal-Serial-Bus-(USB)-konforme Batterielade- und Stromversorgungsschaltung (112) nach einem der Ansprüche 1 bis 4.

## Revendications

1. Un circuit de chargement et d'alimentation électrique compatible bus série universel « USB » (112) comportant :
une circuiterie de chargement de batterie à mode de commutation pour recevoir de l'électricité d'une source électrique externe et pour fournir une puissance de sortie, par le biais d'un noeud de sortie, à un système électronique (114) d'un dispositif de communication électronique (102) et à une batterie (116), ladite circuiterie de chargement de batterie à mode de commutation ayant un circuit intégré (212) et un inducteur (216), ledit circuit intégré (212) agencé pour coopérer avec ledit inducteur (216) pour fournir un courant de ladite puissance de sortie d'amplitude supérieure au courant de ladite puissance reçue de ladite source électrique externe ; une circuiterie d'isolation de batterie (208) ayant un commutateur à semi-conducteur (252) connectant le noeud de sortie à ladite batterie (116), la circuiterie d'isolation de batterie (208) étant agencée pour détecter la tension au niveau dudit noeud de sortie et pour restreindre de façon variable le courant vers ladite batterie (116) quand ladite tension est au-dessous d'une valeur de tension minimum en commandant de façon opérationnelle ledit commutateur à semi-conducteur (252) à mesure que le courant passe à travers lui, **caractérisée en ce que**
une circuiterie additionnelle (260) en communication électrique avec ladite circuiterie d'isolation de batterie (208) pour recevoir une rétroaction dudit système électronique (114) est fournie et, en réponse à ladite rétroaction, pour ajuster ladite valeur de tension minimum relativement aux exigences dudit système électronique (114) ;
grâce à quoi durant la réduction du courant variable ledit système électronique (114) est agencé pour être alimenté avec l'électricité requise, ladite batterie (116) étant alimentée par toute électricité disponible additionnelle.

2. Le circuit tel que revendiqué dans la revendication 1 où ladite circuiterie de chargement de batterie à mode de commutation a une circuiterie d'alimentation électrique à mode de commutation pour recevoir de l'électricité de ladite batterie (116) et pour fournir de l'électricité convertie au système électronique (114) par le biais dudit inducteur (216) et dudit noeud de sortie.

3. Le circuit tel que revendiqué dans la revendication 1 ou la revendication 2 où la tension au niveau du noeud de sortie est réinjectée dans le circuit intégré (212) et ledit circuit intégré (212) est agencé pour ajuster ladite valeur de tension au niveau du noeud de sortie.

4. Le circuit tel que revendiqué dans la revendication 1 comportant de plus un circuit intégré convertisseur courant continu à courant continu à mode de commutation (220) pour recevoir de l'électricité de ladite batterie (116) et pour fournir de l'électricité convertie audit inducteur (216) à l'intérieur de ladite circuiterie de chargement de batterie à mode de commutation.

5. Un procédé de gestion d'électricité pour allouer de l'électricité entre une batterie rechargeable (116) et un système électronique (114) ayant une entrée d'électricité et un certain nombre de modes de fonctionnement, l'électricité fournie à la batterie (116) et au système électronique (114) à partir d'une source électrique requise, le procédé comportant :
dériver ladite source électrique requise d'une source électrique externe, ladite source électrique requise étant d'un courant supérieur mais d'une tension inférieure à ladite source électrique externe ;
recevoir une rétroaction dudit système électronique (114), **caractérisée en ce que** déterminer, en réponse à ladite rétroaction, une valeur de tension minimum nécessaire au niveau d'un noeud directement connecté à ladite entrée d'électricité en référence au mode de fonctionnement dans lequel se trouve actuellement le système électronique (114) parmi lesdits modes de fonctionnement ;
surveiller la tension au niveau dudit noeud ;
augmenter l'allocation d'électricité audit système électronique (114) en restreignant de façon variable le courant de ladite source électrique requise à ladite batterie (116) quand ladite tension est au-dessous de ladite valeur de tension minimum ; et
fournir au moins une électricité suffisante audit système électronique (114) pour qu'il fonctionne correctement.

6. Un dispositif de communication électronique (102) électriquement connectable à une source électrique externe, le dispositif (102) comportant :
un logement de dispositif (108) ;
une batterie rechargeable (116) contenue à l'intérieur dudit logement (108) ;
un système électronique (114) contenu à l'intérieur dudit logement (108) ; et
un circuit de chargement et d'alimentation électrique compatible bus série universel « USB » (112) tel que revendiqué dans n'importe laquelle des revendications 1 à 4.
